# EUROPÄISCHE PATENTANMELDUNG

(11) **EP 1 336 521 A2**
(43) Veröffentlichungstag der Anmeldung: **20.08.2003**
(21) Anmeldenummer: 03001829.5
(22) Anmeldetag: 29.01.2003
(51) Int. Cl.: B60J 7/04

(54) **Deckel für eine Dachöffnung eines Kraftwagens**

(30) Priorität: 14.02.2002 DE 10205959
(71) Anmelder: DaimlerChrysler AG, 70567 Stuttgart (DE)
(72) Erfinder: Fitterer, Holger, 76287 Rheinstetten (DE)

(57) **Zusammenfassung**

Die Erfindung betrifft einen Deckel (14) für eine Dachöffnung (12) eines Kraftwagens, der eigensteif ausgebildet ist und mit seiner oberen Breitseite einen Teil der Außenkontur des Kraftwagendaches bildet.

Die obere Breitseite des Deckels (14) ist von einer Kunststofffolie (32) gebildet, welche flächig auf einem überdeckten Tragelement (30) des Deckels (14) aufliegt.

## Beschreibung

Die Erfindung betrifft einen Deckel für eine Dachöffnung eines Kraftwagens nach dem Oberbegriff des Patentanspruchs 1.

Aus der DE 44 43 526 C1 ist ein solcher Deckel für eine Dachöffnung eines Kraftwagens als bekannt zu entnehmen, der eigensteif ausgebildet ist. Hierzu umfasst der Deckel einem Kern aus energieabsorbierendem Material, welcher von einer dünnwandigen Kunststoff- oder Blechverschalung umgeben ist. Mit seiner oberen Breitseite bildet der Deckel bzw. die Kunststoffoder Blechverschalung einen Teil der Außenkontur des Kraftwagendaches.

Der Erfindung liegt die Aufgabe zugrunde, einen Deckel der eingangs genannten Art zu schaffen, der auf einfachere Weise an das äußere Erscheinungsbild des Kraftwagens angepasst werden kann.

Die erfindungsgemäße Lösung dieser Aufgabe ergibt sich aus den Merkmalen des Hauptanspruchs.
Vorteilhafte Ausgestaltungen der Erfindung sind den übrigen Ansprüchen zu entnehmen.

Bei dem Kraftwagen nach der Erfindung ist die obere Breitseite des Deckels von einer Kunststofffolie gebildet, welche flächig auf einem überdeckten Tragelement des Deckels aufliegt. Hierdurch kann beispielsweise je nach Wagenfarbe eine dementsprechend angepasste Kunststofffolie eingesetzt werden, die für sich genommen sehr einfach hergestellt werden kann. Dabei wird die Folie flächig durch das Tragelement des Deckels getragen, wobei im Unterschied zum Stand der Technik das Tragelement bedeutend einfacher hergestellt werden kann, da an dessen überdeckte obere Breitseite keine großen Qualitätsanforderungen gestellt sind. Zudem kann das Erscheinungsbild des Deckels mit einfachen Mittel - nämlich lediglich durch Einsatz einer entsprechenden Folie - geändert und an den Kraftwagen angepasst werden.

Vorzugsweise ist die Kunststofffolie dabei als tiefgezogene Formschale ausgebildet, die mit einem Kunststoff als Tragelement hinterspritzt ist. Hierdurch wird einerseits ein guter Sandwichverbund zwischen Folie und Tragelement erzielt, und andererseits kann dadurch ein einfaches Herstellungsverfahren des Verbundes erreicht werden.

In weiterer Ausgestaltung der Erfindung bildet das Tragelement mit der Kunststofffolie eine Oberschale des Deckels, welche umlaufend mit einer Unterschale des Deckels verbunden sein kann. Die beiden Schalen begrenzen dabei einen Zwischenraum, über den verteilt Stützstege zur Aussteifung des Deckels angeordnet sind.

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in
- Fig. 1: eine schematische Perspektivansicht auf ein Kraftwagendach mit einer durch ein Lamellenschiebedach verschließbaren Dachöffnung, wobei das Lamellenschiebedach eine Mehrzahl von erfindungsgemäßen Deckeln aufweist; und in
- Fig. 2: einen Querschnitt in Fahrzeuglängsrichtung durch einen erfindungsgemäßen Deckel des Lamellenschiebedachs entlang der Linie II-II in Fig.1.

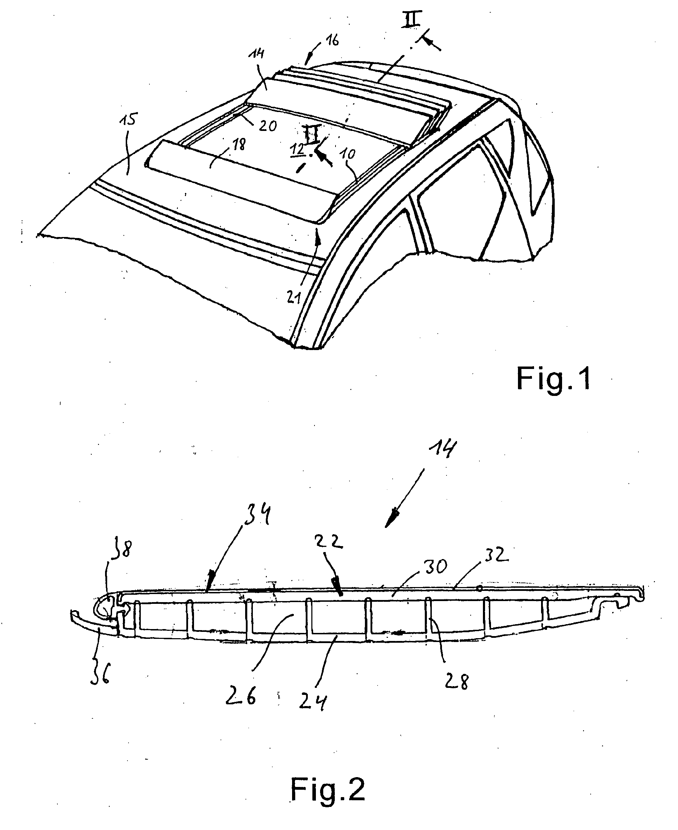

In Fig.1 ist in schematischer Perspektivansicht ein Kraftwagendach mit einer von einem Öffnungsrahmen 10 begrenzten Dachöffnung 12 dargestellt, die durch eine mehrere Lamellen oder dgl. Schiebedeckel 14 umfassende Schiebedachanordnung 16 verschließbar ist. Bei geschlossener Schiebedachanordnung 16 sind die Mehrzahl von Lamellen 14 nebeneinander und in einer gemeinsamen Ebene mit dem fest verbleibenden Dachteil 15 angeordnet, welches in dem dargestellten Ausführungsbeispiel aus Blech besteht. In die hier gezeigte Offenstellung der Schiebedachanordnung 16 sind die Deckel 14 - ausgenommen die vorderste Lamelle 18 - entlang von Führungsschienen 20 des Dachrahmens 10 verschiebbar, wobei die nach hinten bewegten Lamellen 14 in einem hinteren Bereich der Dachöffnung 12 fächerartig übereinander angeordnet sind. Die vordere Lamelle 18 wird beim Öffnen der Schiebedachanordnung 16 in eine mit ihrem hinteren Ende nach schräg oben zeigende Stellung angehoben und verbleibt zur Windabweisung am vorderen Ende der Dachöffnung 12.

Fig.2 zeigt einen Querschnitt in Fahrzeuglängsrichtung durch einen erfindungsgemäßen Deckel 14 des Lamellenschiebedachs 16 entlang der Linie II-II in Fig.1. Der eigensteif ausgebildete Deckel 14 umfasst eine Oberschale 22 und eine Unterschale 24, welche umlaufend miteinander verbunden sind und einen Zwischenraum 26 begrenzen. Über den Zwischenraum 26 sind vertikal und in Fahrzeugquerrichtung verlaufende Stützstege 28 verteilt angeordnet, welche hier einteilig mit der Unterschale 24 ausgebildet sind. In den Zwischenraum 26 kann eine Füllung oder Isolierung eingebracht sein. Sowohl die Oberschale 22 als auch die Unterschale 24 mit den Stegen 28 sind hier aus Kunststoff hergestellt. Dabei können die beiden Schalen 22,24 mit Glasfasern, Fasermatten oder dgl. Verstärkungsprofilen für die beiden Schalen 22,24 versehen sein. Gleichfalls wären auch andere Materialien, beispielsweise Metallblech denkbar. Die Unterschale 24 mit den Stützstegen 28 und die Oberschale 22 sind hier im Bereich der Unterseite der Oberschale 22 miteinander reibverschweißt. Natürlich wären auch andere Verfahren zum Fügen der beiden Schalen 22,24 denkbar.

Die Oberschale 22 umfasst ein Tragelement 30, auf dessen Oberseite eine Kunststofffolie 32 flächig aufliegt. Mit anderen Worten wird die einen Teil der Außenkontur des Kraftwagendaches bildende obere Breitseite 34 durch die Kunststofffolie gebildet. In dem hier gezeigten Ausführungsbeispiel ist die Kunststofffolie 32 als tiefgezogene Formschale ausgestaltet, die mit einem das Tragelement 30 bildenden Kunststoff zu einem Sandwichverbund hinterspritzt ist. Natürlich wäre auch eine Klebeverbindung oder dgl. Fügeverbindung zwischen der Folie 32 und dem Tragelement 30 möglich. Die Kunststofffolie 32 ist kratzfest ausgebildet und vorzugsweise in Wagenfarbe hergestellt. Auch kann die Folie 32 mit einer Oberflächenprägung versehen sein. Auf diese Weise kann das Erscheinungsbild des Deckels mit einfachen Mittel - nämlich lediglich durch Einsatz einer entsprechenden Folie - geändert und an den Kraftwagen angepasst werden. Mit dem Zusammenfügen von Ober- und Unterschale 22,24 wird an der Stirnseite des Deckels 14 eine Dichtungshalteschiene 36 mit einer Dichtung 38 befestigt, mit welcher der Deckel 14 gegenüber einem benachbarten Teil abzudichten ist.

## Patentansprüche

1. Deckel für eine Dachöffnung (12) eines Kraftwagens, der eigensteif ausgebildet ist und mit seiner oberen Breitseite (34) einen Teil der Außenkontur des Kraftwagendaches (15) bildet,
**dadurch gekennzeichnet,**
**dass** die obere Breitseite (34) des Deckels (14) von einer Kunststofffolie (32) gebildet ist, welche flächig auf einem überdeckten Tragelement (30) des Deckels (14) aufliegt.

2. Deckel nach Anspruch 1,
**dadurch gekennzeichnet,**
**dass** die Kunststofffolie (32) eine tiefgezogene Formschale ist, die mit einem Kunststoff als Tragelement (30) hinterspritzt ist.

3. Deckel nach Anspruch 1,
**dadurch gekennzeichnet,**
**dass** das Tragelement (30) mit der Kunststofffolie (32) eine Oberschale (22) des Deckels (14) bildet.

4. Deckel nach Anspruch 3,
**dadurch gekennzeichnet,**
**dass** die Oberschale (22) umlaufend mit einer Unterschale (24) des Deckels (14) verbunden ist und einen Zwischenraum (26) begrenzt, wobei über den Zwischenraum (26) verteilt Stützstege (28) angeordnet sind.

5. Deckel nach Anspruch 4,
**dadurch gekennzeichnet,**
**dass** die Stützstege (28) an die Unterschale (24) des Deckels (14) angeformt sind.

6. Deckel nach Anspruch 5,
**dadurch gekennzeichnet,**
**dass** die Unterschale (24) mit den Stützstegen (28) aus einem Kunststoff besteht und mit der Oberschale (22) des Deckels (14) reibverschweißt ist.
